# EUROPÄISCHE PATENTSCHRIFT

(11) **EP 1 446 342 B1**
(45) Veröffentlichungstag und Bekanntmachung des Hinweises auf die Patenterteilung: **06.04.2005**
(21) Anmeldenummer: 02790359.0
(22) Anmeldetag: 13.11.2002
(51) Int. Cl.: B65G 47/80, B65G 35/06, B65G 47/53

(54) **FÖRDEREINRICHTUNG ZUM FÖRDERN VON FÖRDERGUT AUF PALETTEN ODER DERGLEICHEN MIT RICHTUNGSWECHSEL**
CONVEYING DEVICE FOR CONVEYING STOCK ON PALLETS OR THE LIKE WITH CHANGE OF DIRECTION
CONVOYEUR POUR LE TRANSPORT DE BIENS SUR DES PALETTES OU DES SUPPORTS ANALOGUES AVEC CHANGEMENT DE DIRECTION

(30) Priorität: 22.11.2001 DE 10157161
(43) Veröffentlichungstag der Anmeldung: 18.08.2004
(73) Patentinhaber: Knapp Logistik Automation GmbH, 8075 Hart bei Graz (AT)
(72) Erfinder: FREUDELSPERGER, Karl, A-8075 Hart bei Graz (AT); WAUKMANN, Wilfried, A-8074 Raaba (AT)
(74) Vertreter: Hanke, Hilmar
(86) Internationale Anmeldenummer: PCT/EP2002/012651
(87) Internationale Veröffentlichungsnummer: WO 2003/043915

(56) Entgegenhaltungen:
- DE-A- 19 934 361
- DE-B- 1 259 241
- DE-U- 20 119 005
- US-B1- 6 308 818

## Beschreibung

Die Erfindung betrifft eine Fördereinrichtung nach dem Oberbegriff des Patentanspruches 1.

Eine derartige Fördereinrichtung ist aus der DE 12 59 241 B bekannt.

Soweit vorstehend und im folgenden von "Paletten" die Rede ist, so soll dies nicht einschränkend verstanden werden; vielmehr umfaßt die vorliegende Erfindung auch solche Systeme, in denen andere Transporteinheiten wie zum Beispiel Gitterboxen verwendet werden, um Fördergut, insbesondere Stückgut, darin oder darauf zu transportieren. Ist das Fördergut ein größeres Stückgut mit vergleichsweise großer Standfläche, so kann auf "Paletten" oder dergleichen ganz verzichtet werden.

Hauptproblem bei der Konstruktion einer Fördereinrichtung mit Richtungswechsel insbesondere für schwere Stückgüter auf Paletten, Gitterboxen, etc. ist, daß beim Einfahren der Palette in die Kurve möglichst keine Gleitungen auftreten sollen. Aus diesem Grund erfolgt der Richtungswechsel bei bekannten Umsetzanordnungen durch Umsetzen zwischen Längs- und Quer-Förderern, oder durch Drehtische, die bei Stillstand das Fördergut einschließlich Palette zentral aufnehmen und dann langsam um die Mitte der Palette über eine mittige Vertikalachse des Drehtisches in die Abgaberichtung der zweiten Förderstrecke schwenken, um dort das Fördergut abzugeben. Der Umsetzvorgang erfolgt ähnlich einer Drehscheibe einer Lokomotive auf einem Güterbahnhof. Der Nachteil eines bekannten Drehtisches ist der komplizierte Aufbau und der geringe Durchsatz der bei langsamer Schwenkung des Drehtisches stillstehenden Paletten.

Der Erfindung liegt die Aufgabe zugrunde, eine Fördereinrichtung der eingangs genannten Art bereitzustellen, deren Umsetzanordnung energiesparend und mit einfachen Mitteln einen hohen Palettendurchsatz selbst schwerer Fördergüter ermöglicht.

Zur Lösung dieser Aufgabe wird erfindungsgemäß die Fördereinrichtung mit den Merkmalen des unabhängigen Anspruchs 1 vorgeschlagen.

Wesentlicher Erfindungsaspekt ist, daß die Umsetzanordnung eine angetriebene Linearförderbahn zur Übernahme der Palette(n) von der ersten Förderstrecke, Linearvorwärtsbewegung auf der Linearförderbahn und Abgabe der Palette(n) auf die zweite Förderstrecke umfaßt, wobei die Linearförderbahn zwischen der ersten und der zweiten Förderstrecke über eine angetriebene Schwenkeinrichtung um eine im wesentlichen vertikale Achse verschwenkbar ist, die außerhalb der Förderbahnmitte der Linearförderbahn verläuft. Nach Abgabe der Palette(n) kann die Linearförderbahn in ihre Ausgangslage auf dem gleichen Schwenk- und Linearweg rückgestellt werden.

Die Ansteuerung des Linearantriebs der Linearförderbahn und die Ansteuerung des Schwenkantriebs der Schwenkeinrichtung erfolgen vorzugsweise über eine gemeinsame Steuereinrichtung dergestalt, daß Paletten in der Umsetzanordnung kontinuierlich umgesetzt bzw. bewegt werden, wobei in besonders zweckmäßiger Weise der Linearantrieb der Linearförderbahn und der Schwenkantrieb der Schwenkeinrichtung durch die Steuereinrichtung derart angesteuert sind, daß bei Übernahme der Paletten von der ersten Förderstrecke in einem bestimmten Anfangsabschnitt insbesondere letztlich bis zur Mitte der Schwenkbewegung die Linearförderbewegung der Linearförderbahn abgebremst bzw. verzögert und gleichzeitig die Schwenkbewegung der Linearförderbahn aus dem Stillstand beschleunigt wird, während anschließend insbesondere von der Mitte der Schwenkbewegung oder in einem bestimmten Endabschnitt bis zur Abgabe der Paletten auf die zweite Förderstrecke die Linearförderbewegung der Linearförderbahn beschleunigt und gleichzeitig die Schwenkbewegung der Linearförderbahn bis zum Stillstand verzögert wird.

Die Linearförderbahn umfaßt in besonderer Ausgestaltung einen Tisch mit oberseitigen, angetriebenen Linearfördermitteln, welcher um die vertikale Achse schwenkbar ist, wobei die Achse außerhalb der Tischmitte radial innen vorzugsweise im Winkel zwischen der ersten und der zweiten Förderstrecke liegt.

Wenn vorstehend und nachfolgend von einem "Tisch" die Rede ist, so soll dies nicht einschränkend verstanden werden; vielmehr umfaßt die vorliegende Erfindung auch solche Systeme, in denen andere Aufnahmeeinheiten wie zum Beispiel Untergestelle verwendet werden, um Fördergut, insbesondere Stückgut, darauf umzusetzen.

Die Umsetzanordnung besteht aus einem Tisch, der mit einer angetriebene Fördertechnik, vorzugsweise angetriebenen Förderketten für einen Paletten-Quertransport, oder angetriebenen Rollen für einen Paletten-Längstransport, ausgestattet ist. Der Tisch selbst ist über eine vertikalen Achse schwenkbar, deren Drehpunkt erfindungsgemäß außerhalb des Tisches liegt. Die Gewichtskraft wird vorzugsweise über Rollen abgetragen, die insbesondere auf kreisbogenförmigen Schienen laufen.

Vorteil der erfindungsgemäßen Fördereinrichtung gegenüber einem konventionellen Drehtisch ist der einfachere Aufbau mit dem damit verbundenen Fertigungs- und mithin Preisvorteil, sowie der höhere Durchsatz selbst schwerer Güter vorzugsweise durch einen kontinuierlichen Palettentransport, da durch die exzentrische Anordnung der vertikalen Schwenkachse bezüglich der Linearförderbahn bei einem Einfahren einer Palette auf die "exzentrische Drehscheibe" die Palette radial außen auf der Drehscheibe abgesetzt und dadurch der "Schwung" bzw. die kinetische Energie der bewegten Palette beim Umsetzvorgang ausgenutzt werden kann. Im besonderen wird beim Umsetzvorgang eingangs die Palette auf der Linearförderbahn abgebremst und gleichzeitig eine beschleunigte Schwenkbewegung eingeleitet. Dies kann bis zur Mitte der Schwenkbewegung des exzentrischen Drehtisches der Fall sein. Nach der Mitte oder ausgangsseitig wird umgekehrt die Schwenkbewegung des exzentrischen Drehtisches wieder abgebremst bzw. verzögert und gleichermaßen die lineare Vorwärtsbewegung der Linearförderbahn wieder beschleunigt, bis die Ausgangsstellung zur zweiten Förderstrekke erreicht ist, wo in einer ausgerichteten Stellung die Palette zügig abgegeben wird. Entsprechend sind die einzelnen Antriebe aufeinander abgestimmt.

Bei der Erfindung wird somit zumindest ein Teil der Bewegungsenergie eingangsseitig der Umsetzanordnung von der translatorischen auf die rotatorische Bewegung übertragen und ausgangsseitig umgekehrt die rotatorische wieder in translatorische Bewegung zurückgeführt. Die Palette verläßt die Umsetzanordnung, ohne zum Stillstand zu kommen. Sobald die Palette vollständig der zweiten Förderstrecke übergeben ist, schwenkt die Umsetzanordnung in ihre Ausgangslage zurück.

Es ist also der Energieaufwand für einen Linearantrieb der Linearförderbahn und für einen Schwenkantrieb der Schwenkeinrichtung gering.

Weitere vorteilhaften Merkmale der Erfindung ergeben sich aus den übrigen Unteransprüchen sowie aus der nachfolgenden Beschreibung, in der ein bevorzugtes Ausführungsbeispiel der Erfindung anhand der Zeichnung näher erläutert ist; es zeigen:
- Figur 1: in einer schematischen perspektivischen Darstellung eine Fördereinrichtung zur Förderung von Fördergut auf Paletten mit einer erfindungsgemäßen Umsetzanordnung zwischen einer ersten und einer zweiten geradlinigen Förderstrecke auf gleichem Höhenniveau, die zueinander in einem rechten Winkel verlaufen,
- Figur 2: die Fördereinrichtung nach Figur 1 in einer schematischen Draufsicht mit einer Palette am Ausgang der ersten Förderstrecke,
- Figur 3: die Fördereinrichtung mit einer Palette unmittelbar nach Übergabe auf die Umsetzanordnung,
- Figur 4: die Fördereinrichtung mit einer Palette auf der Umsetzanordnung in einer ersten Schwenkstellung noch vor der Schwenkmitte,
- Figur 5: die Fördereinrichtung mit einer Palette auf der Umsetzanordnung in einer zweiten Schwenkstellung kurz nach der Schwenkmitte, und
- Figur 6: die Fördereinrichtung mit einer Palette auf der Umsetzanordnung unmittelbar vor Abgabe auf die zweite Förderstrecke.

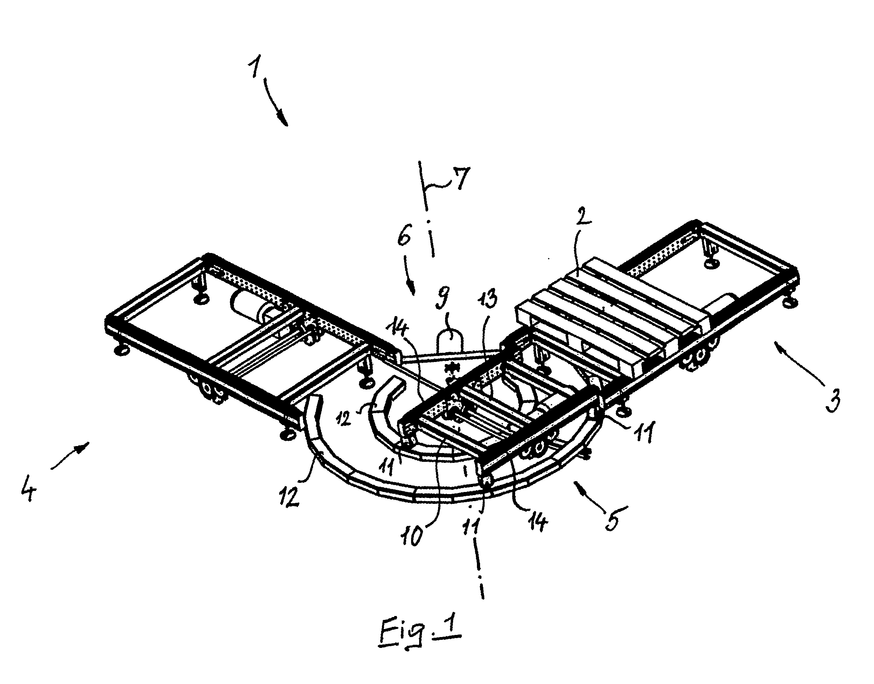

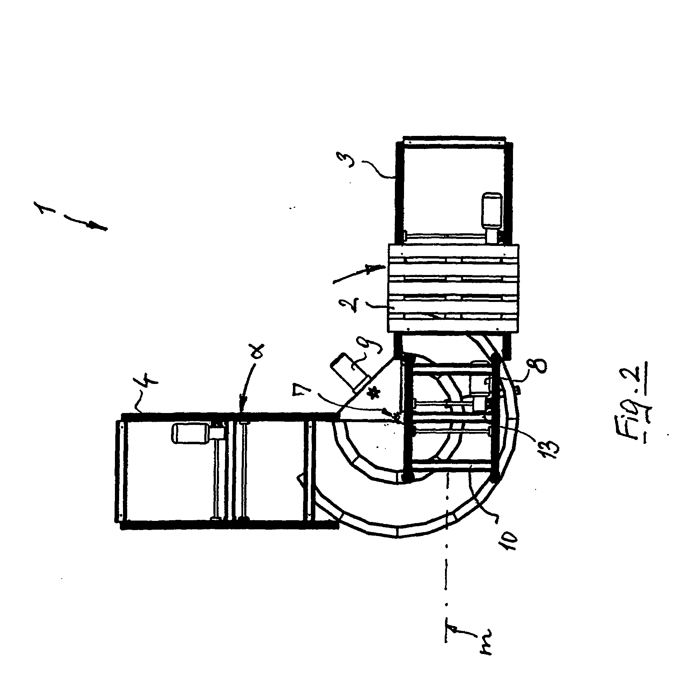

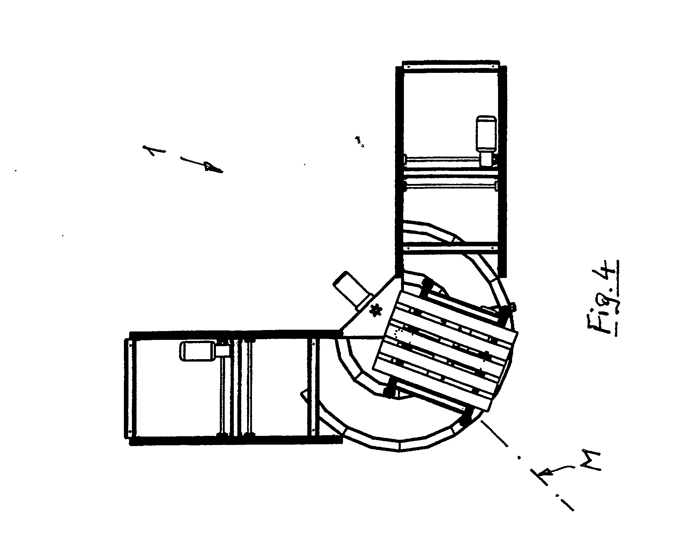

In den Figuren 1 bis 6 ist eine Fördereinrichtung 1 mit Richtungswechsel zum Fördern von Fördergut auf Paletten 2 oder dergleichen längs einer ersten geradlinigen Förderstrecke 3 und einer rechtwinklig hierzu angeordneten zweiten geradlinigen Förderstrecke 4 auf gleichem Höhenniveau, sowie einer Umsetzanordnung zum Umsetzen der Paletten 2 von der ersten auf die zweite Förderstrecke gezeigt.

Die Umsetzanordnung umfaßt eine durch einen Linearantrieb 8 angetriebene Linearförderbahn 5, die zwischen der ersten Förderstrecke 3 und der zweiten Förderstrecke 4 über eine durch einen Schwenkantrieb 9 angetriebene Schwenkeinrichtung 6 um eine vertikale Achse 7 verschwenkt werden kann.

Die vertikale Achse 7 befindet sich außerhalb der Förderbahnmitte m der linearen Förderbahn 5.

Im besonderen umfaßt die Linearförderbahn einen Tisch 10 mit Linearfördermitteln in Form von zwei seitlichen parallelen umlaufenden Förderketten 14, die durch den Linearantrieb 8 angetrieben sind. Der Obertrum der beiden Förderketten 14 steht geringfügig über der Tischebene hervor und befindet sich exakt auf dem Höhenniveau der Fördermittel der ersten und der zweiten Förderstrecke 3 und 4, welche ebenfalls umlaufende angetriebene Förderketten aufweisen.

Der Tisch 10 im Ausführungsbeispiel der Zeichnung ist nicht als Plattform, vielmehr als Gestell gezeigt. Er ist als horizontale Unterlage zu verstehen, welche die vorgenannten Kettenfördermittel aufweist.

Der Tisch 10 besitzt einen seitlichen horizontalen Schwenkarm 13, welcher fest mit dem Tisch 10 verbunden ist und an der vertikalen Achse 7 angelenkt ist.

Die vertikalen Achse 7 befindet sich außerhalb der Tischmitte im winkel α zwischen der ersten und der zweiten Förderstrecke 3 und 4, im gezeigten Ausführungsbeispiel in etwa im Schnittpunkt der Verlängerungen der beiden inneren Förderketten der ersten und der zweiten Förderstrecke 3 und 4.

Der in Draufsicht rechteckige Tisch 10 weist an seiner Unterseite an seinen vier Eckpunkten leerlaufende Rollen 11 auf, welche auf einer feststehenden Abrollunterlage in Form von zwei konzentrischen kreisbogenförmigen Schienen 12 geführt sind. Beide Kreisbogenabschnitte besitzen als Zentrum die vertikale Achse 7.

Im Winkel α zwischen der ersten unter der zweiten Förderstrecke 3 und 4 befindet sich der feststehende Schwenkantrieb 9, welcher über ein nicht gezeigtes Getriebe den Schwenkarm 13 der Schwenkeinrichtung 6 antreibt, um den Tisch 10 in horizontaler Ebene um einen 90°-Winkel von der ersten Förderstrecke 3 zur zweiten Förderstrecke 3 zu verschwenken, und wieder rückzustellen.

Anstelle des stationären Schwenkantriebs 6 können auch die Rollen 11 angetriebene Rollen sein, deren Antrieb dann am schwenkbaren Tisch angeordnet ist.

Die angetriebenen Rollen können auch durch einen Zahnstangentrieb ersetzt sein, wobei dann anstelle der Rollen Antriebsritzel ausgebildet sind, die in kreisbögenförmige bodenseitige Zahnstangen eingreifen, welche die vorgenannten kreisbogenförmigen Schienen 12 ersetzen.

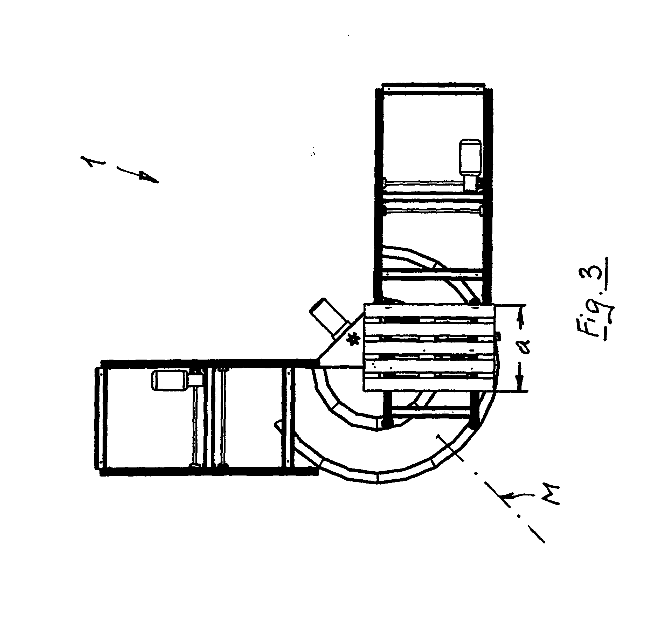

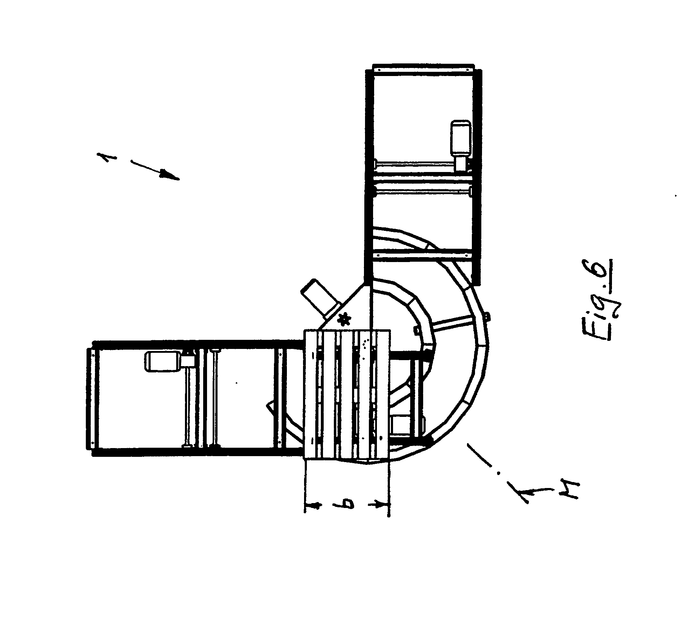

Die Linearförderbahn 5 mit ihren seitlichen Förderketten 14 ermöglicht eine lineare Vorwärtsbewegung der Paletten 2, um die Palette 2 aus der Stellung gemäß Figur 3 in die Stellung gemäß Figur 6 linear vorwärts zu bewegen, unberücksichtigt hierbei die Schwenkbewegung.

Die Ansteuerung des Linearantriebs 8 der Linearförderbahn 5 und die Ansteuerung des Schwenkantriebs 9 der Schwenkeinrichtung 6 erfolgen über eine gemeinsame (nicht veranschaulichte) Steuereinrichtung, welche auch die linearen Antriebe der ersten und der zweiten Förderstrecke ansteuert.

Die vorgenannten Ansteuerungen bewirken, daß in der Fördereinrichtung 1 die Paletten 2 kontinuierlich umgesetzt bzw. bewegt werden.

Im besonderen wird bei Übernahme der Palette 2 unmittelbar nach Übergabe der Palette 2 von der ersten Förderstrecke 3 gemäß Figur 3 in einem bestimmten Anfangsabschnitt a die Linearförderbewegung der mit Umlaufgeschwindigkeit der ersten Förderstrecke angetriebenen Linearförderbahn bis auf einen Minimalwert, gegebenenfalls bis zum Stillstand, abgebremst bzw. verzögert und gleichzeitig die Schwenkbewegung der Linearförderbahn aus dem Stillstand auf einen Maximalwert beschleunigt.

Anschließend werden in einem Zwischenabschnitt die Linearförderbahn und die Schwenkeinrichtung mit kontinuierlicher Linear- bzw. Dreh-Geschwindigkeit betrieben.

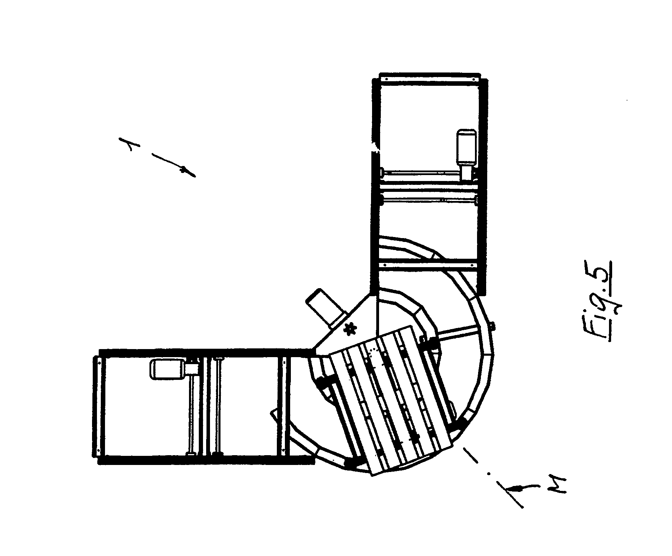

Kurz nach Mitte M der Schwenkbewegung gemäß Figur 5 wird in einem bestimmten Endabschnitt b bis zur Abgabe der Palette 2 auf die zweite Förderstrecke 4 die Linearförderbewegung der Linearförderbahn 5 beschleunigt und gleichzeitig die Schwenkbewegung der Linearförderbahn bis zum Stillstand verzögert. Die Beschleunigung der Linearförderbahn 5 erfolgt solange, bis die Umlaufgeschwindigkeit der zweiten Förderstrecke 4 erreicht ist, um im Anschluß hieran die Palette 2 ruckfrei der zweiten Förderstrecke zu übergeben.

Ist die Palette 2 der zweiten Förderstrecke 4 übergeben, wird die Umsetzanordnung in ihre Ausgangslage der Figur 3 auf dem gleichen Schwenk- und Linearweg zurückgestellt.

Die vorgenannten Beschleunigungen bzw. Verzögerungen können exakt bis zur Mitte M der Schwenkbewegung erfolgen. In diesem Fall entfällt ein kontinuierlicher Antrieb der Schwenkeinrichtung und der Linearförderbahn im oben genannten Zwischenabschnitt.

Gegenüber einem konventionellen Drehtisch mit zentraler Schwenkachse zeichnet sich die vorliegende Erfindung durch exzentrisch innenliegende Anordnung der vertikalen Schwenkachse im Winkel zwischen der ersten und der zweiten Förderstrecke aus. Dadurch kann die kinetische Energie ("Schwung") der auf die Umsetzanordnung eingebrachten Palette 2 für einen Antrieb zur Einleitung der Schwenkbewegung verwendet werden. Nach der Schwenkmitte kann umgekehrt die Rotationsenergie wieder in translatorische Energie (teilweise) umgewandelt werden. Im Ergebnis bedeutet dies einen großen Durchsatz an Paletten in der Umsetzanordnung bei geringem Energieaufwand, was gerade bei schweren umzusetzenden Fördergütern ein großer Vorteil ist.

## Patentansprüche

1. Fördereinrichtung (1) mit Richtungswechsel zum Fördern von Fördergut vorzugsweise auf Paletten (2) oder dergleichen längs einer ersten Förderstrecke (3) und einer anders gerichteten zweiten Förderstrecke (4), sowie einer Umsetzanordnung zum Umsetzen der Paletten von der ersten auf die zweite Förderstrecke, wobei die Umsetzanordnung eine angetriebene Linearförderbahn (5) zur Übernahme der Palette(n) (2) von der ersten Förderstrecke (3), Linearvorwärtsbewegung auf der Linearförderbahn und Abgabe der Palette (n) auf die zweite Förderstrecke (4) umfaßt, und die Linearförderbahn zwischen der ersten und der zweiten Förderstrecke über eine angetriebene Schwenkeinrichtung (6) um eine im wesentlichen vertikale Achse (7) verschwenkbar ist, welche außerhalb der Förderbahnmitte (m) der Linearförderbahn (5) verläuft,
**dadurch gekennzeichnet,**
**daß** die Ansteuerung des Linearantriebs (8) der Linearförderbahn (5) und die Ansteuerung des Schwenkantriebs (9) der Schwenkeinrichtung (6) über eine gemeinsame Steuereinrichtung dergestalt erfolgt, daß Paletten (2) in der Umsetzanordnung kontinuierlich umgesetzt bzw. bewegt werden, wobei der Linearantrieb (8) der Linearförderbahn und der Schwenkantrieb (9) der Schwenkeinrichtung durch die Steuereinrichtung derart angesteuert sind, daß bei Übernahme der Paletten (2) von der ersten Förderstrecke (3) in einem bestimmten Anfangsabschnitt (a) insbesondere letztlich bis zur Mitte (M) der Schwenkbewegung die Linearförderbewegung der Linearförderbahn (5) abgebremst bzw. verzögert und gleichzeitig die Schwenkbewegung der Linearförderbahn (5) aus dem Stillstand beschleunigt wird, während anschließend insbesondere von der Mitte (M) der Schwenkbewegung oder in einem bestimmten Endabschnitt (b) bis zur Abgabe der Paletten (2) auf die zweite Förderstrecke (4) die Linearförderbewegung der Linearförderbahn beschleunigt und gleichzeitig die Schwenkbewegung der Linearförderbahn bis zum Stillstand verzögert wird.

2. Fördereinrichtung nach Anspruch 1,
**dadurch gekennzeichnet,**
**daß** die Linearförderbahn einen Tisch (10) mit oberseitigen, angetriebenen Linearfördermitteln umfaßt, welcher um die vertikale Achse (7) schwenkbar ist, wobei die Achse (7) außerhalb der Tischmitte radial innen im Winkel (α) zwischen der ersten und der zweiten Förderstrecke liegt.

3. Fördereinrichtung nach Anspruch 2,
**dadurch gekennzeichnet,**
**daß** der Tisch (10) unterseitig Gleit- oder Abrollmittel, insbesondere Rollen (11), besitzt, die auf einer stationären insbesondere geführten Gleit- oder Abrollunterlage, vorzugsweise auf kreisbogenförmigen Schienen (12), abgestützt und vorzugsweise geführt sind.

4. Fördereinrichtung nach Anspruch 2 oder 3,
**dadurch gekennzeichnet,**
**daß** der Tisch (10) zumindest einen festen seitlichen Schwenkarm (13) in einer Schwenkverbindung mit der vertikalen Achse (7) besitzt.

5. Fördereinrichtung nach Anspruch 4,
**dadurch gekennzeichnet,**
**daß** der Schwenkarm (13) durch einen stationären Schwenkantrieb (9) angetrieben ist.

6. Fördereinrichtung nach Anspruch 3 oder 4,
**dadurch gekennzeichnet,**
**daß** der Schwenkantrieb angetriebene tischunterseitige Rollen sind oder ein bogenförmiger Zahnstangentrieb ist.

7. Fördereinrichtung nach einem der Ansprüche 2 bis 6,
**dadurch gekennzeichnet,**
**daß** die Linearfördermittel zwei voneinander beabstandete, parallele, angetriebene, umlaufende Förderketten (14) sind, welche aus der Tischebene oberseitig hervorstehen.

8. Fördereinrichtung nach einem der Ansprüche 2 bis 6,
**dadurch gekennzeichnet,**
**daß** die Linearfördermittel angetrieben Einzelrollen sind, welche sich in Querrichtung der Linearförderbahn (5) erstrecken.

9. Fördereinrichtung nach einem der Ansprüche 2 bis 6,
**dadurch gekennzeichnet,**
**daß** die Linearfördermittel ein angetriebenes umlaufendes Förderband ist.

10. Fördereinrichtung nach einem der Ansprüche 2 bis 9,
**dadurch gekennzeichnet,**
**daß** die Linearförderbahn (5) und die erste und die zweite Förderstrecke (3, 4) gleich geartete Linearfördermittel aufweisen.

11. Fördereinrichtung nach einem der Ansprüche 1 bis 10,
**dadurch gekennzeichnet,**
**daß** nach Abgabe der Palette(n) (2) auf die zweite Förderstrecke (4) die Linearförderbahn (5) in ihre Ausgangslage auf dem gleichen Schwenk- und Linearweg rückstellbar ist.

## Claims

1. Said conveying means (1) with change of direction for conveying material to be conveyed, preferably on said pallets (2) or the like, along a said first conveying track (3) and said second, differently directed conveying track (4), as well as with a said transfer arrangement for transferring the said pallets from the said first conveying track to the said second conveying track, wherein the said transfer arrangement comprises a said driven linear conveyor track (5) for taking over the said pallet(s) (2) from the said first conveying track (3), for linear forward movement on the said linear conveyor track and for releasing the said pallet(s) onto the said second conveying track (4), and the said linear conveyor track is pivotable between the said first and second conveying tracks by means of a said driven pivoting means (6) around a said, essentially vertical axis (7), which extends outside the said middle (m) of the said linear conveyor track (5),
**characterized in that**
the said linear drive (8) of the said linear conveyor track (5) and the said pivoting drive (9) of the said pivoting means (6) are actuated by means of a said common control means such that said pallets (2) are transferred and moved continuously in the said transfer arrangement, wherein the said linear drive (8) of the said linear conveyor track and the said pivoting drive (9) of the said pivoting means are actuated by the said control means such that the linear conveying movement of the said linear conveyor track (5) is braked or decelerated during the take-over of the said pallets (2) from the said first conveying track (3) in a said certain initial section (a), especially up to the said middle (M) of the pivoting movement and the pivoting movement of the said linear conveyor track (5) is at the same time accelerated from the stop, while the linear conveying movement of the said linear conveyor track is subsequently accelerated, especially from the said middle (M) of the pivoting movement or in a said certain end section (b) until the release of the said pallets (2) onto the said second conveying track (4) and the pivoting movement of the said linear conveyor track is decelerated at the same time to a stop.

2. Conveying means in accordance with claim 1,
**characterized in that**
the said linear conveyor track has a said table (10) with said top-side, driven linear conveying means, which said table is pivotable around the said vertical axis (7), wherein the said axis (7) is located outside the center of the said table radially inside at a said angle (α) between the said first and second conveying tracks.

3. Conveying means in accordance with claim 2,
**characterized in that**
on the underside, the said table (10) has said rolling means, especially said rollers (11), which are supported and preferably guided on a said stationary, especially guided sliding or rolling support, preferably on said circular arc-shaped rails (12).

4. Conveying means in accordance with claim 2 or 3,
**characterized in that**
the said table (10) has at least one said fixed, lateral pivot arm (13) pivotingly connected to the said vertical axis (7).

5. Conveying means in accordance with claim 4,
**characterized in that**
the said pivot arm (13) is driven by a said stationary pivoting drive (9).

6. Conveying means in accordance with claim 3 or 4,
**characterized in that**
the said pivoting drive is formed by said driven rollers arranged on the underside of the table or is an arc-shaped toothed rack drive.

7. Conveying means in accordance with one of the claims 2 through 6,
**characterized in that**
the said linear conveying means are two said parallel, driven, circulating conveying chains (14), which are located at spaced locations from one another and project from the plane of the table on the top side.

8. Conveying means in accordance with one of the claims 2 through 6,
**characterized in that**
the said linear conveying means are driven individual rollers, which extend in the transverse direction of the said linear conveyor track (5).

9. Conveying means in accordance with one of the claims 2 through 6,
**characterized in that**
the said linear conveying means are a said driven, circulating conveyor belt.

10. Conveying means in accordance with one of the claims 2 through 9,
**characterized in that**
the said linear conveyor track (5) and the said first and second conveying tracks (3, 4) have said linear conveying means of the same kind.

11. Conveying means in accordance with one of the claims 1 through 10,
**characterized in that**
after the release of the said pallet(s) (2) onto the said second conveying track (4), the said linear conveyor track (5) can be reset into its initial position on the same pivoting and linear path.

## Revendications

1. Installation de transport (1) avec un changement de direction pour le transport de la matière à transporter, de préférence, sur des palettes (2) ou quelque chose de similaire le long d'un premier trajet de transport (3) et d'un autre trajet de transport (4) orienté différemment, ainsi qu'avec un dispositif de déplacement pour déplacer les palettes du premier trajet vers le second trajet, le dispositif de déplacement comprenant une bande de transport linéaire (5) entraînée destinée à la réception de(s) palette (s) (2) à partir du premier trajet de transport (3), un mouvement vers l'avant sur la bande de transport linéaire et le transfert de(s) palette(s) sur le second trajet de transport (4), et la bande de transport linéaire située entre le premier et le second trajet de transport est susceptible d'être pivotée par une installation de pivotement (6) entraînée autour d'un axe (7) essentiellement vertical, laquelle bande de transport circule à l'extérieur du centre de la bande de transport (m) de la bande de transport linéaire (5),
**caractérisé en ce que**,
la commande de l'entraînement linéaire (8) de la bande de transport linéaire (5) et la commande de l'entraînement de pivotement (9) de l'installation de pivotement (6) fonctionne via une installation de commande commune de manière à ce que la (les) palette(s) se trouve(nt) déplacée(s), respectivement bougées en continu dans le dispositif de déplacement, l'entraînement linéaire (8) de la bande de transport linéaire et l'entraînement de pivotement (9) de l'installation de pivotement soient commandés par l'installation de commande de manière à ce que le mouvement de transport linéaire de la bande de transport linéaire (5) se trouve freiné, respectivement retardé lors du transfert de palette(s) (2) du premier trajet de transport (3) dans un tronçon initial (a) déterminé, notamment jusqu'au centre finalement, et en même temps de manière à ce que le mouvement de pivotement de la bande de transport linéaire (5) se trouve accéléré à partir de l'arrêt pendant qu'ensuite, le mouvement de transport linéaire de la bande de transport linéaire est accéléré, notamment à partir du centre (m) du mouvement de pivotement ou dans un tronçon terminal (b) déterminé jusqu'à l'expulsion de(s) palette(s) (2) sur le second trajet de transport (4) et qu'en même temps, le mouvement de pivotement de la bande de transport linéaire soit retardé jusqu'à l'arrêt.

2. Installation de transport selon la revendication 1,
**caractérisée en ce que**,
la bande de transport linéaire comprend une table (10) avec des moyens à transport linéaire entraînés par le haut, laquelle table est susceptible de pivoter autour de l'axe (7) vertical, l'axe (7) se trouvant à l'extérieur du centre de la table, de façon radiale à l'intérieur selon un angle (α) entre le premier et le second trajet de transport.

3. Installation de transport selon la revendication 2,
**caractérisée en ce que**,
la table (10) comporte du côté inférieur, des moyens de glissement ou de roulement, notamment des rouleaux (11) qui sont supportés, et de préférence, guidés sur un support de glissement ou de roulement stationnaire ou notamment guidés, de préférence, sur des rails (12) en forme d'arc de cercle.

4. Installation de transport selon la revendication 2 ou 3,
**caractérisée en ce que**,
la table (10) comporte au moins un bras de pivotement (13) latéral fixe dans une liaison de pivotement avec l'axe vertical (7).

5. Installation de transport selon la revendication 4,
**caractérisée en ce que**,
le bras de pivotement (13) est entraîné par un entraînement de pivotement (9) stationnaire.

6. Installation de transport selon la revendication 3 ou 4,
**caractérisée en ce que**
l'entraînement de pivotement est constitué par des rouleaux entraînés du côté inférieur de la table ou d'un entraînement à tige dentée en forme d'arc.

7. Installation de transport selon une des revendications 2 à 6,
**caractérisée en ce que**,
les moyens de transport linéaires sont deux chaînes de transport (14) entraînées, circonférentielles et parallèles, espacées l'une de l'autre.

8. Installation de transport selon une des revendications 2 à 6,
**caractérisée en ce que**,
les moyens de transport linéaires sont des rouleaux individuels entraînés qui s'étendent dans la direction transversale de la bande de transport linéaire (5).

9. Installation de transport selon une des revendications 2 à 6,
**caractérisée en ce que**,
le moyen de transport linéaire est une bande de transport entraînée, circonférentielle.

10. Installation de transport selon une des revendications 2 à 9,
**caractérisée en ce que**,
la bande de transport linéaire (5) et le premier et le second trajet de transport (3, 4) présentent des moyens de transport du même type.

11. Installation de transport selon une des revendications 1 à 10,
**caractérisée en ce**
**qu'**après le transfert de(s) palette(s) (2) sur le second trajet de transport (4), la bande de transport linéaire peut être remise à l'état initial dans sa position de sortie sur le même chemin de pivotement et linéaire.
